# EUROPÄISCHE PATENTANMELDUNG

(11) **EP 1 492 323 A1**
(43) Veröffentlichungstag der Anmeldung: **29.12.2004**
(21) Anmeldenummer: 03014776.3
(22) Anmeldetag: 28.06.2003
(51) Int. Cl.: H04N 1/00

(54) **Verfahren zur Übertragung von Bildern**

(71) Anmelder: CeWe Color AG & Co. OHG, 26133 Oldenburg (DE)
(72) Erfinder: Schmidt-Sacht, Wulf, 26188 Edewecht (DE); Fageth, Reiner, 26135 Oldenburg (DE)
(74) Vertreter: Eisenführ, Speiser & Partner

(57) **Zusammenfassung**

Die Erfindung betrifft die Verwendung von von einem Fotoentwicklungslabor als digitale Bilddateien aus fotographischem Datenmaterial bei der Erstellung eines Fotoindexabzugs erstellten und bereitgestellten Bildern bei der Übertragung von Nachrichten in einem Kommunikationsnetz, insbesondere in einem Mobilfunknetz sowie ein geeignetes Verfahren und eine geeignete Vorrichtung zur Übertragung von derartigen Bildern. Dadurch wird der große zu erwartende Bedarf an digitalen Bilddateien zum Versenden von Bildnachrichten, insbesondere in dem zukünftigen UMTS-Mobilfunknetz, befriedigt.

## Beschreibung

Die Erfindung betrifft ein Verfahren zur Übertragung von Bildern in einem Kommunikationsnetz, insbesondere in einem Mobilfunknetz, wobei die Bilder von einem Fotoentwicklungslabor als digitale Bilddateien erstellt und bereitgestellt werden. Des weiteren betrifft die Erfindung eine entsprechende Vorrichtung, ein entsprechendes Kommunikationsnetz sowie die Verwendung von speziellen digitalen Bilddateien bei der Übertragung von Nachrichten in einem Kommunikationsnetz.

In der nächsten Generation des in Europa verwendeten Mobilfunkstandards, dem sogenannten UMTS-Standard, wird die Übertragung von Bildnachrichten, ggf. kombiniert mit Text- und Sprachnachrichten, möglich sein. Aufgrund der in dem jetzigen Mobilfunkstandard (GSM) sehr intensiven Nutzung der Übertragung von Textnachrichten (SMS), insbesondere durch jugendliche Nutzer, ist zu erwarten, dass auch die Übertragung von Bildnachrichten zukünftig eine intensive Nutzung erfahren wird. Es wird deshalb ein großer Bedarf an digitalen Bilddateien bestehen, wobei diese einerseits eine gute Bildqualität aufweisen sollen, andererseits aber auch keine beliebige Größe aufweisen dürfen, um die Übertragungszeit und damit die Kosten für den Nutzer möglichst gering zu halten.

Bekannt ist, dass die Bilder von einem Fotoentwicklungslabor als digitale Bilddateien erstellt und bereitgestellt werden, beispielsweise als digitales Fotoalbum im Internet.

Der Erfindung liegt die Aufgabe zugrunde, geeignete digitale Bilddateien in großer Zahl zur Übertragung von Bildern in einem Kommunikationsnetz, insbesondere in einem Mobilfunknetz, bereitzustellen.

Diese Aufgabe wird erfindungsgemäß dadurch gelöst, dass die digitalen Bilddateien aus fotographischem Datenmaterial bei der Erstellung eines Fotoindexabzugs erstellt werden. Der Erfindung liegt dabei der Gedanke zugrunde, dass eine Verbindung zwischen dem Kommunikationsnetz, in dem Bilder übertragen werden sollen, und einem Fotoentwicklungslabor, in dem Bilder in sehr großer Zahl von einer großen Zahl von Kunden bearbeitet werden, hergestellt wird, um den erwarteten großen Bedarf an Bildern zur Übertragung von Bildnachrichten in dem Kommunikationsnetz zu decken.

Dabei sollen die digitalen Bilddateien aus fotographischem Datenmaterial bei der Erstellung eines Fotoindexabzugs (Fotoindexprints) erstellt werden. In Zentral-Europa ist durch die Einführung des Fotoindex zu praktisch 100% ein neuer Standard geschaffen worden. Der zu entwickelnde Film wird bei der Belichtung der Negative auf Fotopapier parallel digitalisiert und zu einem Fotoindex montiert. Auf diesem Index werden die Bilder in sogenannten "Thumbnails" zusammen mit der Negativnummer dargestellt. Der Fotoindex wird derzeit mit einer industriellen Videokamera erzeugt. Diese arbeiten meist noch nach, der Videonorm (50 Hertz) und liefern analoge Ausgangsdaten, die danach digitalisiert werden können zu digitalen Bilddateien. Es können jedoch auch direkt digitale Kameras zur Erfassung der digitalen Bilddateien verwendet werden.

Die digitalen Bilddateien können somit erfindungsgemäß in einer Datenbank gespeichert werden, die den Nutzern des Kommunikationsnetzes direkt, über das Internet, für einen Fotohändler oder den Kommunikationsnetzbetreiber zum Zugriff bereitgestellt wird, wie in einer weiteren bevorzugten Ausgestaltung vorgesehen ist.

Zusätzlich oder alternativ zu den für den Fotoindex erstellten digitalen Bilddateien ist es auch möglich, von jeglichem fotographischem Datenmaterial, das von einem Fotoentwicklungslabor im Auftrag eines Kunden bearbeitet wird, insbesondere von Fotonegativen oder Fotopositiven, aber auch von angelieferten digitalen Bildern oder Diapositiven, geeignete digitale Bilddateien zu erstellen, die dann wiederum für die Übertragung von Bildnachrichten in dem Kommunikationsnetz geeignet sind und dafür bereitgestellt werden. So ist insbesondere daran gedacht, bei der Erstellung von Fotopapierabzügen aus Fotonegativen zukünftig ein voll-digitales Printsystem einzusetzen. Dabei werden die Fotopapierabzüge nicht mehr durch herkömmliche Belichtung der Fotonegative erstellt, sondern es werden grundsätzlich aus den Fotonegativen digitale Bilddateien erstellt, anhand derer dann die Fotopapierabzüge erstellt werden. Diese digitalen Bilddateien werden dann auch für einen gewissen Zeitraum gespeichert, so dass ein Kunde zur Nachbestellung von Fotopapierabzügen die Negative nicht mehr einschicken muss, sondern nur noch das gewünschte Bild geeignet identifizieren muss, so dass das Fotoentwicklungslabor aus den vorhandenen digitalen Bilddateien dann die nachbestellten Fotoprodukte erstellen und an den Kunden senden kann. Die in diesem Zusammenhang erstellten digitalen Bilddateien können wiederum, ggf. nach geeigneter Kompression zur Reduzierung der Dateigröße, den Nutzern von Kommunikationsnetzen zur Erstellung und Versendung von Bildnachrichten zur Verfügung gestellt werden.

Es ist eine ganze Reihe von weiteren Nutzungsmöglichkeiten in diesem Zusammenhang denkbar, wie sie ausdrucksweise in den weiteren Unteransprüchen beschrieben sind. So ist denkbar, dass das Fotoentwicklungslabor oder der Fotohändler eines Kunden nach der Entwicklung des Films eines Kunden diesem eine E-mail, MMS oder SMS an dessen E-mail-Adresse bzw. Handynummer sendet zusammen mit einem der auf dem Film vorhandenen Bilder, um ihn über die Fertigstellung der Filmentwicklung zu unterrichten. Denkbar ist auch, dass der Kunde ein oder mehrere Bilder auf sein Telefon, insbesondere auf sein Mobiltelefon, herunterlädt und diese dann betrachten, weiterversenden oder zur Online-Nachbestellung verwenden kann.

Eine Vorrichtung zur Übertragung von Bildern in einem Kommunikationsnetz, insbesondere ein Telefon bzw. Mobiltelefon, ist in den Ansprüchen 6 und 7 definiert. Ein geeignetes Kommunikationsnetz, insbesondere ein Mobilfunknetz wie das zukünftige UMTS-Netz, ist in Anspruch 8 definiert. Anspruch 9 beschreibt die Verwendung von geeigneten digitalen Bilddateien.

Bevorzugt eignet sich die Verwendung der Erfindung in einem Mobilfunknetz. Grundsätzlich ist jedoch denkbar, die Erfindung auch in einem Festnetz einzusetzen, in dem grundsätzlich auch bereits die Übertragung von Bildern möglich ist.

Die Erfindung soll nachfolgend anhand der Zeichnungen näher erläutert werden. Es zeigen:
- Figur 1: ein Blockschaltbild zur Erläuterung des erfindungsgemäßen Verfahrens und
- Figur 2: ein Blockschaltbild zur Erläuterung der Erstellung von digitalen Bilddateien.

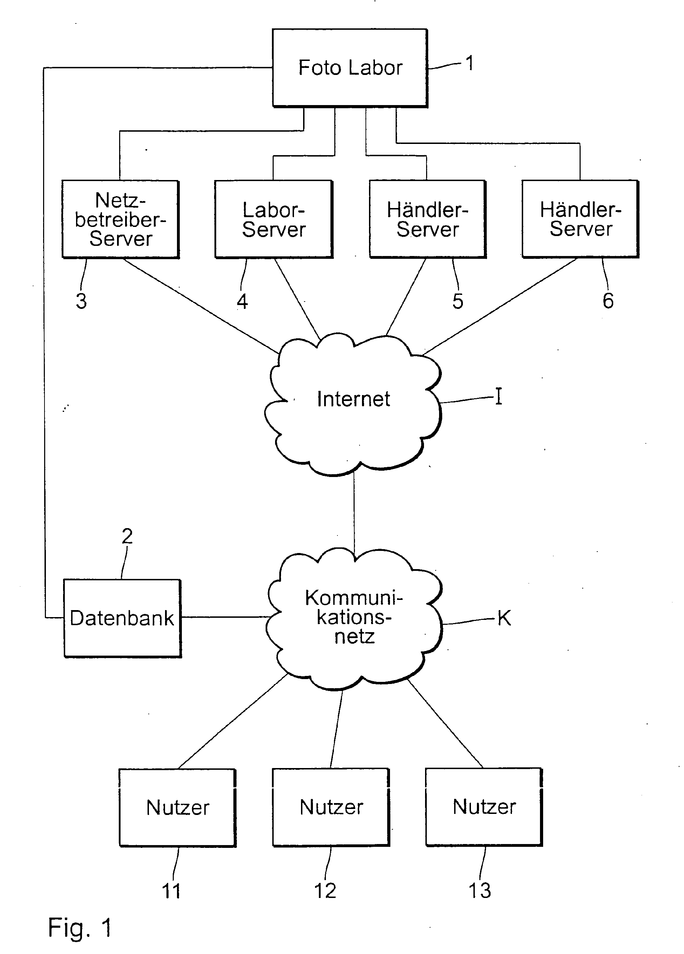

Figur 1 zeigt in einem Blockschaltbild die Verbindung zwischen dem Fotolabor, bei dem die digitalen Bilddateien erstellt werden, und dem Kommunikationsnetz, in dem die digitalen Bilddateien in Form von Bildnachrichten genutzt werden sollen. Gezeigt ist das Fotolabor 1, bei dem aus jeglichem fotographischem Datenmaterial, insbesondere Filmnegativen, die bei der Entwicklung eines Films eines Kunden entwickelt werden, aber auch aus Fotopositiven, Diapositiven oder digitalen Daten, digitale Bilddateien erstellt werden, die sich zur Übertragung in einem Kommunikationsnetz K eignen.

Insbesondere werden bei der Entwicklung eines Films und der Erstellung von Fotopapierabzügen aus entwickelten Fotonegativen und der Erstellung eines zugehörigen Fotoindexausdrucks kleine digitale Bilddateien (Thumbnails) erstellt, die sich hierfür eignen.

Zur Verknüpfung mit dem Kommunikationsnetz K, das beispielsweise ein Mobilfunknetz wie das UMTS-Netz, aber auch ein nach einem anderen Standard arbeitendes Mobilfunknetz oder ein Festnetz einer Telefongesellschaft sein kann, und zur Bereitstellung der digitalen Bilddateien in diesem Kommunikationsnetz K sind grundsätzlich verschiedene Möglichkeiten gegeben.

Eine erste Möglichkeit besteht darin, dass das Fotolabor 1 die digitalen Bilddateien direkt in einer Datenbank 2 speichert, auf die direkt über das Kommunikationsnetz K von dessen Nutzern 11, 12, 13 zugegriffen werden kann. Beispielsweise ist denkbar, dass ein Nutzer 11, der einen Film zur Entwicklung bei dem Fotolabor 1, beispielsweise über einen Fotohändler, abgegeben hat, nach Fertigstellung der Fotoentwicklung auf seine in der Datenbank 2 als digitale Bilddateien gespeicherten Bilder durch Eingabe eines Zugriffscodes mit seiner Kommunikationseinrichtung, also. beispielsweise seinem Festnetztelefon oder seinem Mobilfunktelefon, zugreifen kann und auf seine Kommunikationseinrichtung herunterladen kann, vergleichbar dem im derzeitigen GMS-Mobilfunknetz möglichen Herunterladen von Klingeltönen durch Eingabe einer speziellen Telefonnummer. Die Datenbank 2 könnte dabei direkt von dem Fotolabor 1 gespeist und betrieben werden. Denkbar ist aber auch, dass die Datenbank von dem Kommunikationsnetzbetreiber, z.B. einer Telefongesellschaft, einem Fotohändler, oder einem sonstigen Serviceanbieter, betrieben wird.

Eine weitere Möglichkeit zur Verknüpfung zwischen dem Fotolabor 1 und dem Kommunikationsnetz K ist über das Internet I denkbar. So könnte beispielsweise der Kommunikationsnetzbetreiber einen Server 3 im Internet betreiben, der von dem Fotolabor mit den digitalen Bilddateien gespeist wird und auf den die Nutzer 11, 12, 13 des Kommunikationsnetzes K dann über das Internet 1 zugreifen können. Dazu besteht eine Verbindung V zwischen dem Kommunikationsnetz K und dem Internet I, über die die Nutzer 11, 12, 13 des Kommunikationsnetzes K mit ihrer Kommunikationseinrichtung, also dem Festnetztelefon oder dem Mobiltelefon, direkt auf das Internet l zugreifen können, wie es beispielsweise derzeit im Rahmen des iMode- oder Wap-Verfahrens mittels geeigneter Mobiltelefone möglich ist. Ein Nutzer des Kommunikationsnetzes könnte somit wiederum von dem Netzbetreiber-Server 3 digitale Bilddateien herunterladen, sofern er, beispielsweise mittels eines geeigneten Zugriffscodes, den Zugriff hat, und einfach nur betrachten oder in unterschiedlicher Weise weiter verwenden.

Daneben ist auch denkbar, dass im Internet direkt das Fotolabor 1 einen Labor-Server 4 betreibt, der prinzipiell den gleichen Zugriff wie der Netzbetreiber-Server 3 auf digitale Bilddateien gewährleistet. Darüber hinaus ist auch denkbar, dass die Fotohändler, bei denen ein Kunde seinen Film zur Entwicklung bei dem Fotolabor 1 abgegeben hat, Server 5, 6 im Internet 1 betreiben, auf denen sie die digitalen Bilddateien ihrer Kunden für deren Zugriff bereitstellen.

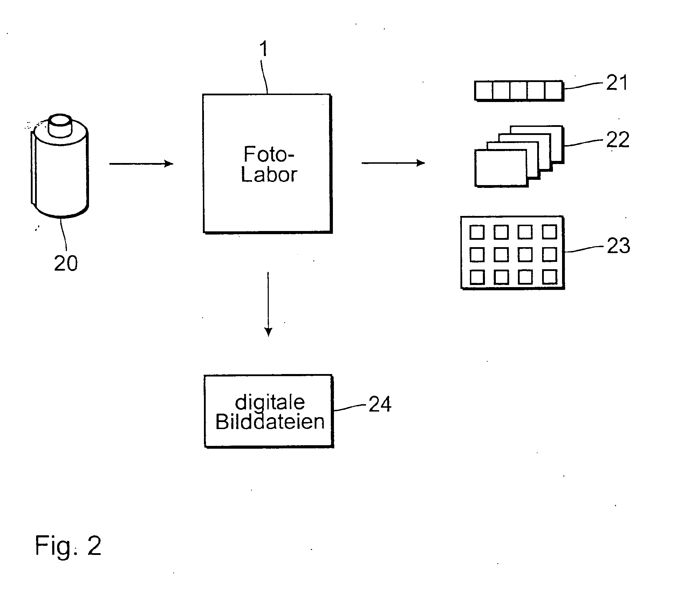

Die Erstellung von digitalen Bilddateien bei dem Fotolabor 1 ist in Figur 2 für einen Beispielfall näher erläutert. Gezeigt ist, dass ein Film 20 zur Entwicklung bei einem Fotolabor 1 angeliefert wird. Bei dem Fotolabor 1 werden daraus Fotonegative 21, Fotopapierabzüge 22 und ein Fotoindexprint 23 erzeugt, die zusammen in der angelieferten Fototasche (nicht gezeigt) über den Fotohändler an den Kunden zurückgeliefert werden. Zur Erstellung des Fotoindexprints 23 werden dabei, bevorzugt mit einer Digitalkamera, digitale Bilder aufgenommen, derzeit in einer maximalen Auflösung von 640x480 Bildpunkten. Zur Darstellung auf dem Fotoindexprint 23 wird allerdings nur eine reduzierte Auflösung von ca. 192x128 Bildpunkten derzeit verwendet. Es stehen also somit bereits digitale Bilddateien 24 sämtlicher bei dem Fotolabor 1 entwickelter Bilder in zwei Auflösungen zur Verfügung, die zum Zugriff durch Nutzer des Kommunikationsnetzes bereitgestellt werden. Darüber hinaus können bei dem Fotolabor 1 aber auch aus anderem fotographischen Datenmaterial, wie oben geschildert, digitale Bilddateien 24 erstellt werden. Die in dem Kommunikationsnetz K bereitgestellten digitalen Bilddateien 24 können auf unterschiedliche Weise genutzt werden. Hat ein Kunde einen Film bei seinem Fotohändler abgegeben, kann er beispielsweise sofort auf den Server des Fotohändlers gehen und die Kombination Kunden- und Komissionsnummer für eine Online-Benachrichtigung der Fertigstellung seines Auftrages freigeben. Dabei bestehen beispielsweise folgende Wahl- und Eingabemöglichkeiten:
- E-mail an vorgegebene E-mail-Adresse,
- Bild- und/oder Text-Nachricht an angegebene Telefonnummer,
- Übertragung eines oder mehrer (aller) Bilder des abgegebenen Films an angegebene Telefonnummer.

Die Freischaltmöglichkeit der Taschennummer der Fototasche kann dann beispielsweise für eine Woche gesperrt werden.

Der Zugriff auf, beispielsweise im Internet gespeicherten, eigenen Bilddateien kann vorzugsweise mittels Passworten oder PIN-Nummern geregelt werden. So ist in einer Ausgestaltung vorgesehen, dass als Zugriffskode die auf dem Abrissabschnitt der Fototasche, mit der das Roh-Bildmaterial an das Fotoentwicklungslabor gesandt wird, befindliche mehrstellige Zahl verwendet wird. Um die Sicherheit gegen unbefugten Zugriff weiter zu erhöhen, kann in Kombination dazu eine weitere auf der zurückgelieferten Fototasche vermerkte oder auf sonstige Weise vom Fotoentwicklungslabor an den Kunden übermittelte Identifizierung verwendet werden, beispielsweise eine auf Klebestellen des Negativfilms vom Fotoentwicklungslabor vermerkte und für interne Zwecke verwendete Kodierungsnummer, die somit nur das Fotoentwicklungslabor und der Empfänger kennen kann.

Auch auf der Fototasche, mit der der Film bei dem Fotohändler abgegeben wird, können bereits entsprechende Vermerke gemacht werden, beispielsweise dass der Kunde direkt von dem Fotolabor durch Übersendung einer Bildnachricht mit einem oder mehreren seiner Bilder direkt an eine Telefonnummer über die Fertigstellung des Auftrages informiert werden will. Darüber hinaus könnte ein Kunde beispielsweise eine oder mehrere Adressen oder Telefonnummern angeben, beispielsweise von Freunden oder Verwandten, an die digitale Bilder versendet werden sollen.

Ein Nutzer des Kommunikationsnetzes könnte sich auch ein oder mehrere Bilder auf sein Telefon herunterladen, an ein oder mehrere weitere Nutzer desselben oder eines anderen Kommunikationsnetzes versenden, an eine sonstige Adresse, beispielsweise seine eigene Homepage zum späteren Herunterladen auf seinen eigenen PC und zur dortigen Speicherung versenden oder in ein Online-Album im Internet verschieben. Der Nutzer könnte auch seine Bilder betrachten und online einen Nachbestellauftrag an das Fotolabor bzw. den Fotohändler schicken. Die angebotenen Dienste können entweder kostenfrei oder kostenpflichtig sein. Insbesondere die Kommunikationsnetzbetreiber verdienen jedoch bei der Übertragung der Bilddateien. Darüber hinaus kann das Fotolabor für die Bereitstellung der digitalen Bilddateien an einen Netzbetreiber oder einen Fotohändler eine Gebühr verlangen. Durch die Erfindung wird somit ein großer zukünftig zu erwartender Bedarf an digitalen Bildern befriedigt.

Die Erfindung zeigt einen Weg zur Bereitstellung einer Vielzahl von digitalen Bilddateien zur Nutzung in einem Kommunikationsnetz auf. Der Erfindungsgedanke liegt dabei darin, aus in analoger Form vorliegendem Fotomaterial digitale Bilddateien zu schaffen, und zwar in großer Zahl, ohne dabei einen Zusatzaufwand zu haben. Dies gelingt dadurch, dass bei dem Fotoentwicklungslabor die sowieso bei der Herstellung des Fotoindexabzugs anfallenden digitale Bilddateien verwendet und in das Kommunikationsnetz eingespeist werden.

## Patentansprüche

1. Verfahren zur Übertragung von Bildern in einem Kommunikationsnetz, insbesondere in einem Mobilfunknetz, wobei die Bilder von einem Fotoentwicklungslabor als digitale Bilddateien erstellt und bereitgestellt werden,
**dadurch gekennzeichnet, dass** die digitalen Bilddateien aus fotographischem Datenmaterial bei der Erstellung eines Fotoindexabzugs erstellt werden.

2. Verfahren nach Anspruch 1,
**dadurch gekennzeichnet, dass** die digitalen Bilddateien aus fotographischen Datenmaterial, insbesondere aus Fotonegativen oder Fotopositiven, erstellt werden.

3. Verfahren nach einem der vorhergehenden Ansprüche,
**dadurch gekennzeichnet, dass** die digitalen Bilddateien von dem Fotoentwicklungslabor, einem Fotohändler oder einem Kommunikationsnetzbetreiber zum Zugriff durch Nutzer des Kommunikationsnetzes, insbesondere zum direkten Zugriff oder zum Zugriff über das Internet, in einer Datenbank bereitgestellt werden.

4. Verfahren nach einem der vorhergehenden Ansprüche,
**dadurch gekennzeichnet, dass** nach Erstellung der Bilddateien von dem Fotoentwicklungslabor, einem Fotohändler oder einem Kommunikationsnetzbetreiber mindestens ein Bild an einen oder mehrere vorgegebene Nutzer des Kommunikationsnetzes, insbesondere an dessen E-mail-Adresse oder dessen Kommunikationseinrichtung, gesendet wird.

5. Verfahren nach einem der vorhergehenden Ansprüche,
**dadurch gekennzeichnet, dass** anhand empfangener Bilder von einem Nutzer des Kommunikationsnetzes die Auswahl und Bestellung von Fotoprodukten bei einem Fotohändler oder dem Fotoentwicklungslabor erfolgen kann.

6. Vorrichtung zur Übertragung von Bildern in einem Kommunikationsnetz, insbesondere in einem Mobilfunknetz, mit Mitteln zur Übertragung von Bildern, die als digitale Bilddateien von einem Fotoentwicklungslabor erstellt und bereitgestellt werden,
**dadurch gekennzeichnet, dass** die Mittel zur Übertragung von aus fotographischem Datenmaterial bei der Erstellung eines Fotoindexabzugs erstellten digitalen Bilddateien ausgestaltet sind.

7. Vorrichtung nach Anspruch 7,
**dadurch gekennzeichnet, dass** die Vorrichtung ein Telefon, insbesondere ein Mobiltelefon, ist mit Mitteln zum Zugriff auf in einer Datenbank bereitgestellten digitalen Bilddateien und mit einem Display zur Anzeige von Bildern.

8. Kommunikationsnetz, insbesondere Mobilfunknetz, zur Übertragung von Bildern, wobei die Bilder von einem Fotoentwicklungslabor als digitale Bilddateien erstellt und bereitgestellt werden,
**dadurch gekennzeichnet, dass** die digitalen Bilddateien aus fotographischem Datenmaterial bei der Erstellung eines Fotoindexabzugs erstellt werden.

9. Verwendung von von einem Fotoentwicklungslabor als digitale Bilddateien aus fotographischem Datenmaterial bei der Erstellung eines Fotoindexabzugs erstellten und bereitgestellten Bildern bei der Übertragung von Nachrichten in einem Kommunikationsnetz, insbesondere in einem Mobilfunknetz.
